Europäisches Patentamt

**European Patent Office**

**Office européen des brevets**

(19)

(11) Publication number: **0 166 999**
**A2**

(12) **EUROPEAN PATENT APPLICATION**

(21) Application number: **85106938.5**

(22) Date of filing: **05.06.85**

(51) Int. Cl.⁴: **G 06 F 7/552**

(30) Priority: **29.06.84 US 626495**

(43) Date of publication of application:
**08.01.86 Bulletin 86/2**

(84) Designated Contracting States:
**DE FR GB**

(71) Applicant: **International Business Machines Corporation**
**Old Orchard Road**
**Armonk, N.Y. 10504(US)**

(72) Inventor: **Markstein, Peter Willy**
**2127 Ridge Street**
**Yorktown Heights New York 10598(US)**

(74) Representative: **Lancaster, James Donald**
**IBM United Kingdom Patent Operations Hursley Park**
**Winchester, Hants, S021 2JN(GB)**

(54) Time saving method for computing square roots on a computer having a "one bit at a time" division instruction.

(57) A method for reducing the time for computing square roots by the Newton-Raphson iteration which is designed to be implemented on various types of small mini and micro-computers which do not have a full-word divide capability but which do have at least a "one bit at a time" divide instruction. Only as many result digits are generated upon each iteration as are shown to be accurate, whereby up to a fifty percent saving in computing time may be realized.

EP 0 166 999 A2

1

TIME SAVING METHOD FOR COMPUTING SQUARE
ROOTS ON A COMPUTER HAVING A
"ONE BIT AT A TIME" DIVISION
INSTRUCTION

FIELD OF THE INVENTION

The present invention has particular utility
in a reduced instruction set computer which
lacks a full word division instruction, but
does have an instruction that generates a few
bits of quotient per iteration. In a typical
reduced instruction set computer, one or two
bits of quotient can be developed by a single
instruction.

An article entitled "The 801 Minicomputer,"
by George Radin, published in ACM SIGNPLAN
NOTICES, Vol. 17, No. 4, April 1982, pages
39-47, includes a general description of an
experimental computer whose operational
characteristics depend to a large extent on a
very fast memory subsystem having separate
caches for instruction and data and also
having a primitive very basic instruction set
providing most commonly used machine operations, most of which should be executable
in a single machine cycle. The various one
cycle instructions making up the instruction

2

set include all computational instructions,
including an instruction to compute one bit
of a quotient.  The present invention has
particular utility in such a machine architecture.

## DESCRIPTION OF THE PRIOR ART

U. S. Patent 3,631,230 issued to T. C. Chen
discloses an implementation of a square root
function in hardware, but the method in this
patent is designed to avoid division and to
use shifts and adds.

Patent 3,631,230 teaches how to build several
elementary functions, as well as full word
division using shifters and adders.  Its
emphasis is on the use of hardware to construct the above-named functions in one
instruction, albeit long running instructions.  Its approach is diametrically
opposed to the reduced instruction set
computer notion, because it uses addition
circuitry and also longer instruction times.

The present invention performs the square
root function with a simple division instruction, and, with less hardware, is competitive
in performance with the realization disclosed
in U. S. Patent 3,631,230.

3

U. S. Patent 3,829,671, issued to Gathright et al discloses a circuit for computing the square root of the sum of two squares. However, the Gathright patent does not apply to the problem of computing the square root of a single number.

U. S. Patent 3,234,369, comprises a hardware embodiment of a square root technique that is frequently taught in high school. It converges more slowly than the very well known Newton Raphson technique. The particular embodiment in 3,234,369 uses a great amount of additional hardware, useful only to the square root problem, and is thus counter to the concepts of a reduced instruction set computer architecture.

### SUMMARY AND OBJECTS OF THE INVENTION

It is a primary object of this invention to compute the square root of a number using a reduced instruction set computer which does not have a full word division instruction but which computer does have a division instruction which computes one bit of a quotient.

It is a further object of the invention to compute the square root in a short amount of time to high accuracy, the time comparing favorably with the time taken by a complex

4

instruction set computer which has a full
word division instruction.

It is another object of this invention to
compute the square root of a number in a
reduced instruction set computer which has a
division instruction which computes more than
one bit of quotient, but not a full word of
quotient bits.

The objects of the invention are accomplished
in general by a method for performing the
Newton-Raphson square root approximation
using a 'one-bit at a time' divide step
operation, which computes only those bits of
the result of each iteration which are known
to be accurate, thus saving unnecessary
computational operations.

## DESCRIPTION OF THE DRAWINGS

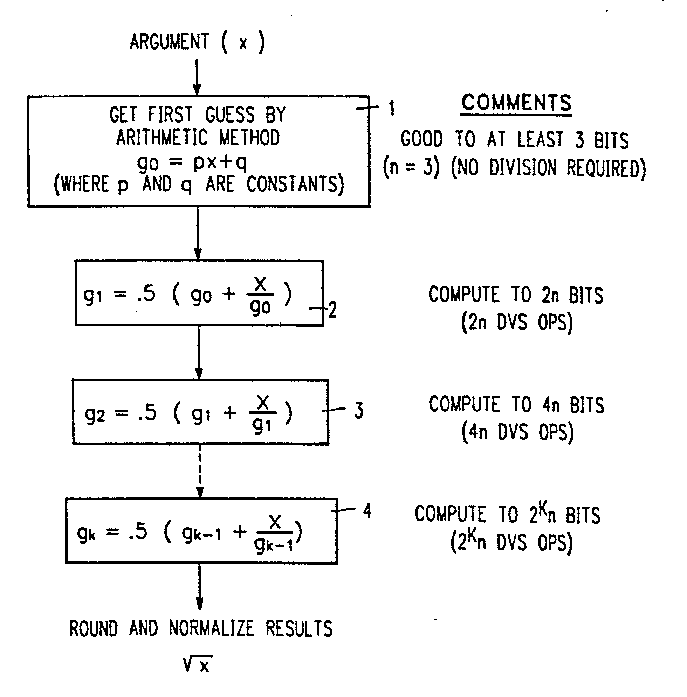

FIG. 1 comprises a flowchart specifying the
precise calculations performed during each
succeeding cycle of the computational process
indicating how many bits are computed on each
iteration of the basic calculation.

5

## DETAILED DESCRIPTION OF THE INVENTION

The square root of a number x is usually computed by producing a guess g, and obtaining an improved guess $g_{new}$ by the Newton Raphson iteration (approximation):

$$g_{new} = 0.5 \; (g + \frac{x}{g}) \qquad\qquad (1)$$

If on each iteration g is accurate to n bits of accuracy, then $g_{new}$ as computed by (1) will be accurate to at least 2n bits. This is a known feature of the Newton-Raphson iteration for square root. Formula (1) is reapplied as often as needed, each time using as g, the value of $g_{new}$ previously obtained from (1), to get the desired accuracy. Division is the time consuming part of the algorithm since the addition step is simple and dividing by 2 (multiplying by .5) is accomplished by a simple shift.

On a computer lacking a full word divide instruction but having a one-bit divide instruction such as the IBM 801, full word division is usually achieved by performing as many one-bit divisions as there are bits in a full word.

The following describes a way to reduce the number of one-bit divisions by roughly half when computing $\sqrt{x}$, so that a saving in computing time of up to fifty percent may be realized. Suppose the guess g is known to be good to n bits of accuracy (e.g.. for $0.5 \le x \le 1.0$, $g = \frac{1}{2}X + \frac{1}{2}$ is good to four bits of accuracy). $\qquad (2)$

Then $g_{new}$ will be good to 2n bits (8 bits, for example, n=4), and can be computed using only 2n one-bit divide steps (not a 32 bit simulation of a full word division). Similarly the next iteration will have only 4n accurate bits, and requires 4n divide-step instructions, etc. For a floating point format such as used by IBM System/370, a good initial guess is:

$$g = \begin{cases} \overset{p}{\frac{1}{2}}x + \overset{q}{\frac{1}{2}} & \text{if } \frac{1}{2} \leq x \leq 1 \\[2ex] x + \frac{1}{4} & \text{if } \frac{1}{8} \leq x < \frac{1}{2} \\[2ex] 2x + \frac{1}{8} & \text{if } \frac{1}{16} \leq x < \frac{1}{8} \end{cases} \qquad (3)$$

All of the above produce a g good to at least 4 bits (n=4).

If a 24 bit result is required, as for IBM System/370 short floating point format, using (3) as a starting guess, subsequent divisions need only be computed to 6, 12, and 24 bits successively, or 42 divide steps in all (although 8, 16 and 32 bits could have been performed). This is less than the time required for two floating point divisions if full word floating point division were built into the hardware using a one-bit at a time algorithm. If it were desired to compute the

7

square root to produce a good 64 bit result,
using (3) to produce the initial guess,
(where n=4) subsequent iterations using (1)
would require 8, 16, 32, and 64 one-bit
divide steps.

Similarly, if a reduced instruction set
computer were to compute k quotient bits of
accuracy, only 2n/k such divide steps would
be required to compute the iteration (1).

FIG. 1 is merely a consolidation of the above
described method. Block 1 relates to the
initial guess ($g_O$) as determined by well
known arithmetic methods based on the magnitude of x. It involves only constants and no
division. Block 2 is the first application
of the basic Newton-Raphson formula (1) and
is carried out to 2n bits of accuracy via 2n
one bit divide (DVS) operations. As will be
apparent the original value of n is the
number of accurate bits produced by the
initial guess for $g_O$ and is usually 3 or 4
bits. In this general flowchart n is shown
to be 3 although the guess always produces 4
good bits. This is because it is frequently
desirable to produce 24 good bits. And thus
M=3 is most economical of computation.
Block 3 reapplies the basic formula and
doubles the number of bits computed.

Block 4 represents the last iteration of the
basic computation and is determined by the
accuracy desired in the result. This is
easily determined by the relationship.

$2^k n \geq$ (the number of accurate bits required).

The output from block 4 is rounded and normalized to conform to the floating point format required by the system as will be well understood.

The following is a detailed description of the divide step instruction used in the previously referenced '801 Minicomputer' and its operational effects within the system. For a more detailed description of the operation of the overall minicomputer architecture using such a divide step instruction, reference is made to our European Patent Application Publication No. 130377 (EP 84106174.0).

A numerical example is also included explaining a complete full word divide and the CA bit of the Condition Register and the architecture for the MQ register are also set forth.

Hereinafter are general descriptions of a number of straightforward machine operations included in the Appendix A program which describe the instructions in terms of said 801 Minicomputer architecture. This material should allow any skilled programmer to easily adapt the principles of the present invention to any reduced instruction set mini/micro processor having a reduced width divide step operation in its instruction set (i.e., less than a full word).

Load Address, D-form LA    RT,D(RA)

| 03 | RT | RA | D |
|---|---|---|---|
| 0 | 6 | 11 | 16           31 |

The sum (RA|0)+D is loaded into register RT.

Condition Codes:
    Set: None Load Address, X-form LAX   RT,RA,RB

| 63 | RT | RA | RB | . | 03 |
|---|---|---|---|---|---|
| 0 | 6 | 11 | 16 | 21 | 31 |

The sum (RA|0)+RB is loaded into register RT.

Condition Codes:
    Set: None Load Address Upper, UL-form LAU   RT,RA,UL

| 02 | RT | RA | UL |
|---|---|---|---|
| 0 | 6 | 11 | 16           31 |

The sum (RA|0) plus the second argument
is placed in register RT.  The second
argument is formed with the 16 bit UL
field in bits 0-15 and 0's in bits
16-31.

Condition Codes:
    Set: None

10

Load, D-form

L    RT,D(RA)

| 17 | RT | RA | D |
|---|---|---|---|
| 0 | 6 | 11 | 16          31 |

The word containing the character addressed by (RA|0)+D is loaded into register RT.

Condition codes:
        Set: None

Branch True, D-form BT    BI,RA,D

| 40 | BI | RA | D |
|---|---|---|---|
| 0 | 6 | 11 | 16          31 |

A bit, whose position is specified by the BI field, is selected from register RA if RA is not 0, or from the CR if RA is 0. If the bit is a 1, then the address of the next instruction is computed by the sum of the address of this instruction and the sign-extended D field. If it is a 0 the execution continues sequentially.

Condition Codes:
        Set: None

Branch False with Execute, D-form BFX    BI,RA,D

| 43 | BI | RA | D |
|---|---|---|---|
| 0 | 6 | 11 | 16          31 |

A bit, whose position is specified by
the BI field, is selected from register
RA if RA is not 0, or from the CR if RA
is 0. If the bit is a 0, then the
address of the next instruction is
computed by the sum of the address of
this instruction and the sign-extended
D field. If it is a 1 the execution
continues sequentially.

The subject instruction is executed
regardless of the value of the bit
tested.

Condition Codes:
     Set: None


Branch True, X-form BTR    BI,RA,RB

| 63 | BI | RA | RB | 40 |
|---|---|---|---|---|
| 0 | 6 | 11 | 16 | 21          31 |

A bit, whose position is specified by
the BI field, is selected from register
RA if RA is not 0, or from the CR if RA
is 0. If the bit is a 1, then the
address of the next instruction is set
to the contents of the RB register. If
it is a 0 the execution continues
sequentially.

Condition Codes:
     Set: None

T0983-167

12

Branch True with Execute, D-form BTX    BI,RA,D

| 41 | BI | RA | D |
|---|---|---|---|
| 0 | 6 | 11 | 16          31 |

A bit, whose position is specified by
the BI field, is selected from register
RA if RA is not 0, or from the CR if RA
is 0. If the bit is a 1, then the
address of the next instruction is
computed by the sum of the address of
this instruction and the sign-extended
D field. If it is a 0 the execution
continues sequentially.

The subject instruction is executed
regardless of the value of the bit
tested.

Condition Codes:
    Set: None Branch False, D-form BF  BI,RA,D

| 42 | BI | RA | D |
|---|---|---|---|
| 0 | 6 | 11 | 16          31 |

A bit, whose position is specified by
the BI field, is selected from register
RA if RA is not 0, or from the CR if RA
is 0. If the bit is a 0, then the
address of the next instruction is
computed by the sum of the address of
this instruction and the sign-extended
D field. If it is a 1 the execution
continues sequentially.

Condition Codes:
    Set: None

13

Branch False with Execute, X-form BFRX  BI,RA,RB

| 63 | BI | RA | RB | | 43 |
|---|---|---|---|---|---|
| 0 | 6 | 11 | 16 | 21 | 31 |

A bit, whose position is specified by
the BI field, is selected from register
RA if RA is not 0, or from the CR if RA
is  0.  If the bit is a 0, then the
address of the next instruction is set
to the contents of the RB register.  If
it  is  a  1  the  execution  continues
sequentially.

The  subject  instruction  is  executed
regardless  of  the  value  of .the  bit
tested.          .

Condition Codes:
     Set: None

Load From MQ, X-form

LFMQ    RT

| 63 | RT | //// | //// | | 00 |
|---|---|---|---|---|---|
| 0 | 6 | 11 | 16 | 21 | 31 |

The MQ register is loaded into register
RT.

Condition Codes:
     Set: None

YO983-167

14

Add Immediate, D-form AI    RT,RA,D

| 48 | RT | RA | D |
|---|---|---|---|
| 0 | 6 | 11 | 16 ⋯ 31 |

The value computed from RA+D is placed
in register RT.

Condition Codes:
      Set: LT, EQ, GT, LG, LL, OV, CA,
           CD, C4-C28, SO Add, X-form A    RT,RA,RB

| 63 | RT | RA | RB | 48 |
|---|---|---|---|---|
| 0 | 6 | 11 | 16 | 21 ⋯ 31 |

The value computed from RA+RB is placed
in register RT.

Condition Codes:
      Set: LT, EQ, GT, LG, LL, OV, CA,
           CD, C4-C28, SO

15

Divide Setup, X-form DVSET          RS.RA.RB

| 63 | RS | RA | RB | 00 | 62 |
|----|----|----|----|----|----|
| 0 | 6 | 11 | 16 | 21 | 26 31 |

The contents of RS are loaded into the MQ. The carry bit is set
to reflect the relationship of the signs of RA and RB so that a
subsequent Divide Step instruction on those values will operate
correctly.

Condition Codes:

CA is set to one if the signs of RA and RB agree; zero if
they disagree.

All other condition bits are unchanged.

Y0933-167

DIVIDE-STEP INSTRUCTION

DVS RT.RA.RB

| 63 | RT | RA | RB | 00 | 1C |
|---|---|---|---|---|---|
| 0 | 6 | 11 | 16 | 21 | 26 31 |

The contents of register RA is subtracted from (RB ፡ (bit 0 of MQ)) if CA is one. or the contents of register RA is added to (RB ፡ (bit 0 of MQ)) if CA is zero. The 32 low order bits of the result are loaded into register RT. The MQ is shifted left one position. and bit 31 of the MQ is set to 1 if bit 0 of RA is equal to the sign of the result: else it is set to 0.

Condition Codes:

CA = 1 if bit 0 of RA is equal to the sign of the result. else CA = 0.

= bit 31 of MQ after instruction completes.

OV = 1 if bit 0 of RB is equal to the sign of the result. else OV = 0.

All other condition bits are unchanged.

Programming notes:

1) Let RB. RA. and MQ represent the initial values of two different registers and the MQ. Let $R^n$ represent the contents of RB after n successive DVS operations (assuming that RT is RB).

and $Q^n$ represent the contents of the low order n bits of the MQ after n DVS operations (with the high order bit of $Q^n$ repeated to make a 32-bit quantity). Then, if $-2^{31} \leq |(RB\|MQ) \div RA| < 2^n$, $n \leq 32$.

$$RB\|MQ_{0...n-1} = (Q^n_{0-30}\|1) \times RA + R^n$$

2) Since $RB\|MQ_0$ is 33 bits, the sign of the result may differ from the high order bit of RT.

3) The overflow latch is meant to be set on after the first DVS to indicate that the quotient is too large to be contained in a single register. It is set incorrectly in the following cases: it is not set on when the quotient of two negative numbers will be $+2^{31}$, and it is set on when the quotient will be $-2^{31}$. These exceptional cases must be detected by software.

4) The non-restoring DVS instruction produces a quotient Q and a remainder R which bear the following relationship to the dividend $RB\|MQ$ and the divisor RA after 32 consecutive DVS instructions:

$$RB\|MQ = (Q_{0-30}\|1) \times RA + R$$

To get the canonical System/370 quotient q and remainder r, i.e.,

$$RB\|MQ = q \times RA + r; |r| < |RA|.$$

$$sgn(r) = sgn(RB) \text{ if } r \neq 0,$$

consider two cases.

1. q is positive. If $Q_{31}=1$, then the sign of R agrees with the sign of RA, and hence with the sign of the dividend. Since $Q_{0-30} \cdot 1 = Q$, the result is algebraically correct. If $Q_{31} = 0$, the sign of R is not the canonical one. It can be made so by adding RA to R, and subtracting 1 from $Q_{0-30} \cdot 1$. But since $Q_{31}=0$, $Q_{0-30} \cdot 1-1 = Q+1-1 = Q$. Finally, if R=RA, set R=0, and increase Q by 1.

2. q is negative. If $Q_{31}=1$, the sign of R agrees with that of RA and hence disagrees with that of the dividend. To get the sign of R to be the canonical one, subtract RA from R. Then, since $Q=Q_{0-30} \cdot 1$, Q must be increased by 1. If $Q_{31}=0$, R has the correct sign, but since $Q + 1 = Q_{0-30} \cdot 1$, Q must be increased by 1. Finally, if R (as corrected above) is equal to $-RA$, set R to zero and decrease the quotient by 1. (As a matter of coding, one first forces R to have the correct sign. Then, if $R=-RA$, R is set to 0, and q=Q. Otherwise q=Q+1. It is never necessary to subtract from Q.

19

| RIMI   RA,RS,SH,MASK

| 15 | RS | RA | SH | MASK |
|---|---|---|---|---|
| 0 | 6 | 11 | 16 | 21        31 |

The contents of register RS are rotated
left SH positions.  The rotated data is
inserted into register RA under control
of the generated mask.

Condition Codes:
        Set: LT, EQ, GT, LG
        Set to 0: LL Rotate  Immediate  then  AND With Mask,
M-form | RINM   RA,RS,SH,MASK

| 13 | RS | RA | SH | MASK |
|---|---|---|---|---|
| 0 | 6 | 11 | 16 | 21        31 |

The contents of register RS are rotated
left SH positions.  The rotated data is
AND'ed with the generated mask and the
result is placed in register RA.

Condition Codes:
        Set: LT, EQ, GT, LG
        Set to 0: LL Long Shift Left Immed | LSLIQ    RA,RS,SH

| 63 | RS | RA | SH | 83 |
|----|----|----|----|----|
| 0  | 6  | 11 | 16 | 21          31 |

Register RS is rotated left N bits where N is the shift amount specified by SH. The rotated word is stored in the MQ register. A mask of 32-N 1's followed by N 0's is generated. The rotated word is then merged with the previous contents of the MQ register, under control of the generated mask. (For each bit of the mask which is one, the respective bit of the rotated word is used. For each bit of the mask which is zero, the respective bit of the previous MQ is used.) The merged word is stored in RA.

Condition Codes:
      Set: LT, EQ, GT, LG
      Set to 0: LL Shift Right

| SR    RA,RS,RB

| 63 | RS | RA | RB | 68 |
|----|----|----|----|----|
| 0  | 6  | 11 | 16 | 21          31 |

Register RS is rotated left 32-N bits where N is the shift amount specified in bits 27-31 of register RB. A mask of N 0's followed by 32-N 1's is generated when bit 26 of RB is zero. A mask of all 0's is generated when bit 26 of RB is one. The logical AND of the rotated word and the generated mask is stored in RA.

Condition Codes:
      Set: LT, EQ, GT, LG
      Set to 0: LL

0166999

21

Appendix A is an assembly language program for
the IBM 801 for performing the herein
described method for computing square roots
on a minicomputer having only a one bit at a
time divide-step instruction. It is designed
to calculate the square root of a number
(argument) expressed in standard IBM System
370 Floating Point format having a fraction
portion and an exponent wherein the fraction
is between 0.0625 and 1.0. Provision is made
for odd exponents and for fractions lying
outside of the above range as well as for a
number of other special conditions such as a
negative argument.

22

APPENDIX A

```
            MACRO
&L          NM        &A,&B,&C
&L          RINM      &A,&B,0,&C
            MEND
*                     SHORT FLOATING POINT SQUARE ROOT
*                     R3 HAS ADDRESS OF ARGUMENT
*                     R2 HAS ADDRESS WHERE RESULT SHOULD BE STORED
*                     ABENDS ON NEGATIVE ARGUMENTS
*                     ACCEPTS UNNORMALIZED ARGUMENTS
*                     ALWAYS RETURNS NORMALIZED RESULTS
*                     RETURNS ZERO ON UNDERFLOW
SQRT        CSECT
            ENTRY SQRT S
ZERO        EQU       0
ARG         EQU       1
CHAR        EQU       4
FR          EQU       5
ODD         EQU       6
TEMP        EQU       7
G           EQU       8
NUM         EQU       9
RET         EQU       31
SQRT S      L         ARG,0(3)          GET ARGUMENt
            LA        ZERO,ZERO         ESTABLISH ZERO IN A REGISTER
            BT        0,ARG.ERROR       NEGATIVE ARGUMENT -> ERROR
            RINM      CHAR,ARG,16,X'00007F00'   ISOLATE CHARACTERISTIC
            NM        FR,ARG,X'00FFFFFF'        ISOLATE FRACTION
            RINM      ODD,CHAR,25,X'00000002'   IF EXPONENT IS ODD,
*                               IMAGINE THAT THE EXPONENT IS INCREASED
*                               BY 1, AND THAT THE FRACTION IS RIGHT
*                               SHIFTED BY 4.   THEN, TO KEEP
*                               NORMALIZATION, SHIFT FRACTION LEFT FOUR,
*                               AND REMEMBER TO POSTNORMALIZE BY SHIFT-
*                               IN RESULT RIGHT BY TWO (SAVED IN ODD).
NORM        NM        TEMP,FR,X'00F00000'      TEST FOR NORMALIZED ARGUMENT
            BZ        SMALL             IF SMALL, TEST FOR ZERO ELSEWHERE
            NM        TEMP,FR,X'00C00000'      TEST FOR FRACTION < 0.25
            BNZX      OK
            LAU       G,0,X'0100'
            SLI       FR,FR,2           IF FRACTION < 0.25, MULTIPLY IT BY 4,
            AI        ODD,ODD,1         AND REMEMBER TO POSTNORMALIZE 1 PLACE.
OK          BT        8,FR,OK2
            LAU       G,FR,X'0080'      for .25 <= fraction <= .5 guess
*                                       sqrt(fr) = fr + 1/4.
OK2         A         G,G,FR            FOR 1 < FRACTION <= 0.5, GUESS
*                                       SQRT(FR) =1/2 (FR + 1)
*                                         0 <= |ERROR| < 0.0625
*                                       I.E. GUESS GOOD TO ALMOST 4 BITS
*                                       G HAS 25 FRACTION BITS
            SLI       NUM,FR,0          ALIGN ORIGINAL FRACTION
            DVSET     ZERO,G,NUM        SET UP FOR DIVISION
            DVS       NUM,G,NUM         COMPUTE 6 BITS OF FRACTION/GUESS
            DVS       NUM,G,NUM
            DVS       NUM,G,NUM
            DVS       NUM,G,NUM
            DVS       NUM,G,NUM
            DVS       NUM,G,NUM
            DVS       NUM,G,NUM
            LSLIQ     NUM,ZERO,7        ISOLATE  QUOTIENT IN NUM
            SLI       NUM,NUM,19        ALIGN GUESS AND FRACTION/GUESS
            LAX       G,G,NUM           ADD GUESS AND FRACTION/GUESS TO GET
*                                       NEXT GUESS, 26 BIT FRACTION
*                                       USE LAX INSTEAD OF A TO PRESERVE CA BIT
```

```
SLI    NUM,FR,1         ALIGN FOR DIVISION
DVSET  ZERO,G,NUM       SET CA TO ONE TO START DIVISION
DVS    NUM,G,NUM        COMPUTE 12 BIT QUOTIENT
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
LSLIQ  NUM,ZERO,13      ISOLATE 12 BIT QUOTIENT, ZERO MQ
SLI    NUM,NUM,14       ALIGN QUOTIENT WITH GUESS
LAX    G,G,NUM          NEW GUESS, 27 BIT FRACTION
SLI    NUM,FR,2         ALIGN FRACTION WITH GUESS
DVSET  ZERO,G,NUM       SET CA TO ONE TO START DIVISION
DVS    NUM,G,NUM        PRODUCE 24-BIT QUOTIENT
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
DVS    NUM,G,NUM
LFMQ   NUM
SLI    NUM,NUM,3        ALIGN QUOTIENT WITH GUESS
A      G,G,NUM          FINAL GUESS  28 BIT FRACTION
AI     G,G,7            IT IS AN UNDERESTIMATE, WHEN
*                                IT IS NOT EXACT.  WE BUMP IT
*                                A LITTLE, NOT ENOUGH TO
*                                CAUSE FRACTION OVERFLOW, BUT
*                                ENOUGH THAT SQRT OF SQUARES
*                                YIELDS INTEGERS.
AI     ODD,ODD,4        COMPUTE TOTAL POSTNORMALIZATION,
*                                INCLUDING FOUR BIT RIGHT SHIFT TO
*                                REDUCE FRACTION TO 24 BITS
SR     G,G,ODD          FRACTION NOW ALIGNED
AI     CHAR,CHAR,X'4100'        (PREPARE TO DIVIDE CHAR BY 2)
RIMI   G,CHAR,16-1,X'FF000000'  DIVIDE EXPONENT BY 2 AND
*                                MERGE WITH FRACTION TO PRODUCE RESULT.
*                                CHARACTERISTIC HAD ALREADY BEEN
*                                INCREASED BY 65 .... 64 SO THAT DIVISION
```

X0953-167

24

```
*                              BY TWO WOULD PRODUCE A NEW CHARACTER-·
*                              ISTIC, THE EXTRA ONE TO CAUSE ROUNDING
*                              UP FOR ODD EXPONENTS.
QUIT    BRX     RET
        ST      G,0(2)
SMALL   SLI     G.FR.4          PRENORMALIZE ONE DIGIT
        BZ      QUIT            EXIT FOR ZERO FRACTION
        AI      CHAR,CHAR,X'FFOO'        ADJUST EXPONENT
        BNM     NORM
        LR      FR,G
        BX      QUIT            IF UNDERFLOW, RETURN ZERO
        LA      G,0
ERROR   RTC
SSQRTS  DC      F'0'
        END
```

25

CLAIMS

1. An improved method for use in a processor which has a 'one or few bits at a time' divide capability, for computing the square root of a number x (argument) by the Newton-Raphson (N-R) successive approximation method which method comprises

computing an initial guess (g) by a standard arithmetic procedure determined by the relationship $g=px+q$ where p and q are predetermined constants related to the magnitude of the argument which initial guess is known to be accurate to n digits,

computing a first (N-R) approximation g, according to the relationship $g_{new}=.5(g_{old} + x/g_{old})$ and performing the division portion of the formula to 2n digits and evaluating the remainder of the formula using said value of $x/g_{old}$

26

computed to 2n digits to determine $g_{new}$,

repeating said (N-R) approximation for successive values of $g_{new}$ and computing quotient bits for no more than those digits known to be accurate for the particular iteration of the N-R approximation

continuing said process until the number of digits computed are equal to or greater than the desired degree (bits) of accuracy according to the relationship bits in $g_{new} \leq 2^k n$, where K is the particular iteration of the N-R approximation.

2.    A method as set forth in claim 1, wherein the processor has an m bit at a time divide capability wherein the first computation of $g_{new}$ would only require $2n/m$ divide steps to compute $x/g_{old}$ to the required accuracy and subsequently to continue the iterations of the N-R approximation until the relationship bits of $g_{new} \leq 2^k n/m$ is satisfied.

3.    A method as claimed in claim 1 or 2, including commencing the method by specifying the argument in standard floating point format consisting of a fraction part of an exponent wherein the fraction part (f) satisfies the relationship $1 \geq f \geq .0625$.

28

4. An improved method for use in a
processor which has only a 'one bit at a
time' divide capability for computing
the square root of a number x (argument)
by the Newton-Raphson (N-R) successive
approximation method which method
comprises

specifying the argument in standard
floating point format, consisting of a
fraction part and an exponent wherein
the fraction part(f) satisfies the
relationship $1 \geq f \geq .0625$ and the exponent
is an even number;

computing an initial guess (g) by a
standard arithmetic procedure
determined by the relationship
g=px+q where p and q are
predetermined constants related
to the magnitude of the argument
fraction which initial guess is
known to be accurate to n digits, p
and q being valued as follows:

29

$$
g = \begin{cases} \dfrac{1}{2}x + \dfrac{1}{2} & \text{if } \dfrac{1}{2} \le x \le 1 \\[2em] x + \dfrac{1}{4} & \text{if } \dfrac{1}{8} \le x < \dfrac{1}{2} \\[2em] 2x + \dfrac{1}{8} & \text{if } \dfrac{1}{16} \le x \le \dfrac{1}{8} \end{cases}
$$

computing a first (N-R) approximation $g$, according to the relationship $g_{new}=.5\,(g_{old} + x\text{-}g_{old})$ and performing the division portion of the formula to 2n digits and evaluating the remainder of the formula using said value of $x/g_{old}$ computed to 2n digits to determine $g_{new}$'

repeating said (N-R) approximation for successive values of $g_{new}$ and doubling the number of digits computes (for $x/g_{old}$) upon each successive iteration of the method

continuing said process until the number of digits computed are equal to or greater than the desired degree (bits) of accuracy according to the relationship bits in $g_{new} \le 2^{k}n$ where k is the particular iteration of the N-R approximation.

ARGUMENT $(x)$

| GET FIRST GUESS BY ARITHMETIC METHOD $g_0 = px + q$ (WHERE $p$ AND $q$ ARE CONSTANTS) | — 1 |

GOOD TO AT LEAST 3 BITS
$(n = 3)$ (NO DIVISION REQUIRED)

$$g_1 = .5 \left( g_0 + \frac{X}{g_0} \right)$$ — 2

COMPUTE TO $2n$ BITS
($2n$ DVS OPS)

$$g_2 = .5 \left( g_1 + \frac{X}{g_1} \right)$$ — 3

COMPUTE TO $4n$ BITS
($4n$ DVS OPS)

$$g_k = .5 \left( g_{k-1} + \frac{X}{g_{k-1}} \right)$$ — 4

COMPUTE TO $2^K n$ BITS
($2^K n$ DVS OPS)

ROUND AND NORMALIZE RESULTS

$\sqrt{X}$